# EUROPÄISCHE PATENTSCHRIFT

(11) **EP 4 038 017 B1**
(45) Veröffentlichungstag und Bekanntmachung des Hinweises auf die Patenterteilung: **24.12.2025**
(21) Anmeldenummer: 20764349.5
(22) Anmeldetag: 27.08.2020
(51) Int. Cl.: C01B 32/205, G21C 1/12, G21C 5/08

(54) **VERFAHREN ZUM HERSTELLEN VON GRAPHIT UND VERTIKALER GRAPHITIERUNGSOFEN**
PROCESS FOR PRODUCING GRAPHITE AND VERTICAL GRAPHITIZATION FURNACE
PROCÉDÉ DE PRODUCTION DE GRAPHITE ET FOUR DE GRAPHITISATION VERTICAL

(30) Priorität: 30.09.2019 DE 102019126394
(43) Veröffentlichungstag der Anmeldung: 10.08.2022
(60) Teilanmeldung: 24184196.4
(73) Patentinhaber: ONEJOON GmbH, 37120 Bovenden (DE)
(72) Erfinder: MUCK, Matthias, 37139 Adelebsen (DE); VERVOORT, Petrus Jacobus, 37120 Bovenden (DE)
(74) Vertreter: Ostertag & Partner Patentanwälte mbB
(86) Internationale Anmeldenummer: PCT/EP2020/073932
(87) Internationale Veröffentlichungsnummer: WO 2021/063603

(56) Entgegenhaltungen:
- EP-A1- 2 980 017
- DE-A1- 102012 111 050
- DATABASE WPI Week 201576, Derwent World Patents Index; AN 2015-672628, XP002801194
- DATABASE WPI Week 201577, Derwent World Patents Index; AN 2015-673055, XP002801195

## Beschreibung

### HINTERGRUND DER ERFINDUNG

### 1. Gebiet der Erfindung

Die Erfindung betrifft ein Verfahren zum Herstellen von Graphit in einem vertikalen Graphitierungsofen mit wenigstens einem Prozessraum, der eine Heizzone begrenzt, bei welchem
a) in der Heizzone eine Temperatur von 2.200 °C bis 3.200 °C, insbesondere von 2.700°C bis 3.200 °C, vorzugsweise von 3.000 °C, erzeugt wird;
b) partikelförmiges graphitierbares Material dem Prozessraum durch einen Zugang zugeführt wird;
c) graphitierbares Material durch die Heizzone des Prozessraumes hindurch gefördert wird, in der es zu Graphit graphitiert wird;
d) erhaltenes Graphit durch einen Ausgang aus dem Prozessraum abgeführt wird.

Außerdem betrifft die Erfindung einen vertikalen Graphitierungsofen mit wenigstens einem Prozessraum, der eine Heizzone begrenzt, mit
a) einer Heizeinrichtung, mittels welcher in der Heizzone eine Temperatur von 2.200 °C bis 3.200 °C, insbesondere von 3.000°C, erzeugbar ist;
b) einem Zuführförderer, mittels welchem partikelförmiges graphitierbares Material dem Prozessraum durch einen Zugang zuführbar ist;
   wobei
c) graphitierbares Material durch die Heizzone des Prozessraumes hindurch förderbar ist, in der es zu Graphit graphitiert wird;
d) ein Abgabeförderer vorhanden ist, mittels welchem erhaltenes Graphit durch einen Ausgang aus dem Prozessraum abführbar ist.

### 2. Beschreibung des Standes der Technik

Die Graphitierung von graphitierbarem Material erfolgt in einer Inertgasatmosphäre. Es ist bekannt, polykristallines Graphit, das für Anodenmaterial verwendet wird, in Batchprozessen in sogenannten Acheson-Öfen herzustellen, in denen graphitierbares Material zu Graphit graphitiert wird.

Es ist außerdem aus der EP 2 980 017 B1 bekannt, graphitierbares Material mit großen Partikeldurchmessern von über 3 mm in vertikalen Graphitierungsöfen der eingangs genannten Art zu Graphit zu graphitieren. Nach diesem Prozess muss das erhaltene Graphit, das für Anodenmaterial zu große Partikel aufweist, zu einem Graphitpulver zerkleinert werden. Aus der JP 20215 189 646 A und JP 2015 189 644 A ist es bekannt, ein Prozessrohr mit einer Heizspirale bzw. mit Heizelektroden aufzuheizen.

### ZUSAMMENFASSUNG DER ERFINDUNG

Es ist Aufgabe der Erfindung, ein Verfahren und einen vertikalen Graphitierungsofen der eingangs genannten Art bereitzustellen, welche energieeffizient sind und eine weitgehend gleichbleibende und reproduzierbare Graphitqualität ermöglichen.

Diese Aufgabe wird bei einem Verfahren der eingangs genannten Art dadurch gelöst, dass
e) der Prozessraum im Innenraum eines Prozessrohres mit einem Rohrmantel aus Graphit untergebracht ist und das Prozessrohr mit Hilfe einer elektrischen Heizeinrichtung auf Grund des elektrischen Widerstandes des Prozessrohres im Bereich der Heizzone aufgeheizt wird
und
in der gesamten Heizzone eines bestimmten Prozessraumes eine Materialsäule ausgebildet wird, wobei graphitierbares Material nach Zuführen durch den Zugang von oben durch eine Einlasszone des Prozessraumes hindurch auf die Materialsäule rieselt.

Hier und im weiteren ist gegebenenfalls jeweils ein "bestimmter" Prozessraum angesprochen. Dies soll ausdrücken, dass bei gegebenenfalls mehreren Prozessräumen eines Ofens ein bestimmter Prozessraum betrachtet wird. Dies kann, muss aber nicht, auch ein Prozessraum sein, in dem eine andere Variante abläuft, sofern diese zeitgleich ablaufen können.

Die im Weiteren als Variante B bezeichnete Variante erlaubt einen kontinuierlichen Prozess in einer definierten Atmosphäre.

Für einen gleichleibend kontrollierbaren Prozess ist es günstig, wenn einem bestimmten Prozessraum so viel Volumen an graphitierbarem Material pro Zeiteinheit zugeführt wird, wie diesem Prozessraum Volumen an Graphit pro Zeiteinheit abgeführt wird.

Das graphitierbare Material kann kontinuierlich oder intermittierend einem bestimmten Prozessraum zugeführt und Graphit kann kontinuierlich oder intermittierend aus diesem Prozessraum abgeführt werden, wobei eine kontinuierliche Zufuhr und Abfuhr bevorzugt ist. Bei einem intermittierenden Prozess können Zufuhr und Abfuhr zeitgleich oder zeitversetzt erfolgen.

Für eine reproduzierbare Durchführung des Verfahrens ist es von Vorteil, wenn ein Füllstand der Materialsäule weitgehend konstant gehalten wird.

Wie oben bereits angesprochen, kann ein Graphitierungsofen mit mehreren Prozessräumen verwendet werden, dessen mehrere Prozessräume zeitlich parallel betrieben werden.

Es ist günstig, wenn die Partikel des graphitierbaren Materials einen durchschnittlichen Partikeldurchmesser größer als 5 µm und kleiner als 3.000 µm, kleiner als 2.500 µm, kleiner als 2.000 µm, kleiner als 1500 µm, kleiner als 1.000 µm oder kleiner als 500 µm haben oder dass die Partikel des graphitierbaren Materials einen durchschnittlichen Partikeldurchmesser von 5 µm bis 3.000 µm, von 500 µm bis 2.000 µm oder von 1.000 µm bis 1.500 µm haben.

Für einen effektiven Betrieb ist es günstig, wenn die Temperatur der Heizzone ermittelt wird, insbesondere am oberen Ende der Heizzone und/oder in etwa der Mitte der Heizzone und/oder am unteren Ende der Heizzone und/oder an der Materialsäule jedes vorhandenen Prozessrohres. Auf diese Weise kann Temperaturschwankungen in der Heizzone rasch Rechnung getragen werden, indem die Heizeinrichtung derart angesteuert wird, dass unerwünschte Temperaturveränderungen ausgeglichen werden.

Bei dem vertikalen Graphitierungsofen der eingangs genannten Art wird die angegebene Aufgabe dadurch gelöst, dass
e) der Prozessraum im Innenraum eines Prozessrohres mit einem Rohrmantel aus Graphit untergebracht ist und eine elektrische Heizeinrichtung vorhanden ist, mit deren Hilfe das Prozessrohr auf Grund des elektrischen Widerstandes des Prozessrohres im Bereich der Heizzone aufheizbar ist, und die Heizzone bei wenigstens einem Prozessraum eine Fall-Heizzone und eine Stand-Heizzone umfasst, die derart eingerichtet sind, dass in der Stand-Heizzone eine Materialsäule ausgebildet ist und graphitierbares Material nach Zuführen durch den Zugang von oben durch die Fall-Heizzone auf die Materialsäule rieselbar ist.

Wie oben erläutert, ist es günstig, wenn bei dem Graphitierungsofen mehrere Prozessräume vorhanden sind.

Außerdem ist eine Temperatur-Überwachungseinrichtung von Vorteil, mittels welcher die Temperatur der Heizzone ermittelbar ist, insbesondere am oberen Ende der Heizzone und/oder in etwa der Mitte der Heizzone und/oder am unteren Ende der Heizzone und/oder an der Materialsäule jedes vorhandenen Prozessrohres.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: einen vertikalen Graphitierungsofen gemäß einem ersten Ausführungsbeispiel, bei welchem graphitierbares Material als Materialsäule von oben nach unten durch einen Prozessraum geführt wird, wobei eine erste Art der Prozessführung veranschaulicht ist;
- Figur 2: den vertikalen Graphitierungsofen gemäß Figur 1, wobei eine zweite Art der Prozessführung veranschaulicht ist;
- Figur 3: einen vertikalen Graphitierungsofen gemäß einem zweiten Ausführungsbeispiel mit zwei parallel verlaufenden Prozessräumen;
- Figur 4: eine Abwandlung des Ausführungsbeispiels von Figur 3, bei dem die parallel verlaufenden Prozessräume voneinander beabstandet sind;
- Figur 5: einen vertikalen Graphitierungsofen gemäß einem nicht erfindungsgemäßen dritten Ausführungsbeispiel mit einem Fördersystem für Materialbehälter, in denen sich graphitierbares Material befindet.

### BESCHREIBUNG BEVORZUGTER AUSFÜHRUNGSBEISPIELE

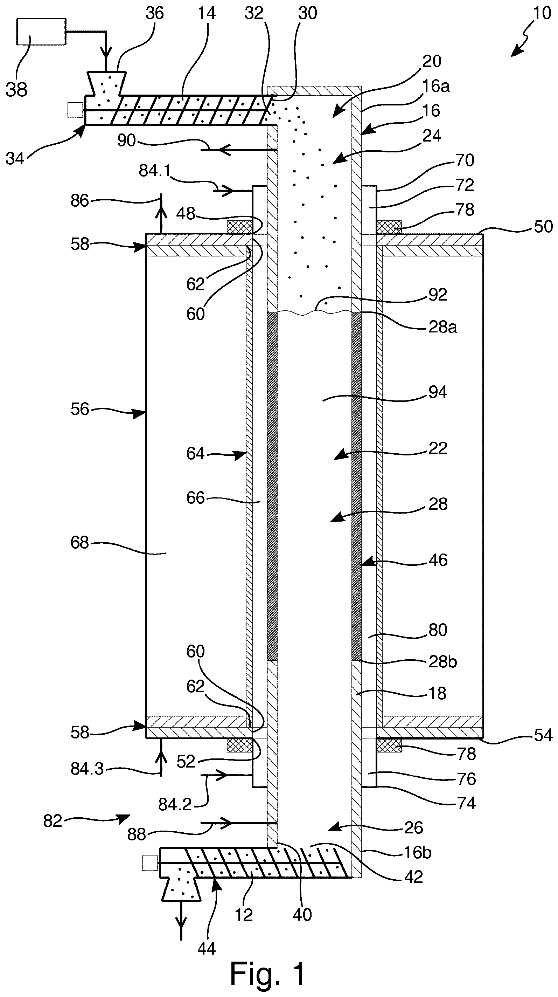

Figur 1 zeigt einen vertikalen Graphitierungsofen 10, welcher zur Herstellung von polykristallinem Graphit 12 für Anodenmaterial verwendet wird und nachfolgend lediglich als Ofen 10 bezeichnet wird. Als Ausgangsmaterial für die Herstellung des polykristallinen Graphits 12 dient partikelförmiges graphitierbares Material 14. Graphitierbare Materialien enthalten Kohlenstoff, wobei es bei der Graphitierung zu einer Umwandlung von amorphem Kohlenstoff zu polykristallinen Graphit kommt. Beispiele für graphitierbare Materialen sind Braunkohle oder Steinkohle sowie gegebenenfalls auch Kunststoffe.

Die Partikel des graphitierbaren Materials 14 haben vorzugsweise eine Partikelgröße von kleiner als 3 mm haben. Bevorzugt haben die Partikel des graphitierbaren Materials 14 einen durchschnittlichen Partikeldurchmesser größer als 5 µm und kleiner als 3.000 µm., kleiner als 2.500 µm, kleiner als 2.000 µm, kleiner als 1500 µm, kleiner als 1.000 µm oder kleiner als 500 µm. Die Partikel können alternativ einen durchschnittlichen Partikeldurchmesser von 5 µm bis 3.000 µm, von 500 µm bis 2.000 µm oder von 1.000 µm bis 1.500 µm haben.

Der Ofen 10 umfasst ein Prozessrohr 16 mit einem Rohrmantel 18 aus Graphit, das in seinem Innenraum 20 einen Prozessraum 22 unterbringt, der eine vertikal oben angeordnete Einlasszone 24, eine vertikal unten angeordnete Auslasszone 26 und eine dazwischen angeordnete Heizzone 28 begrenzt, in der die Partikel des graphitierbaren Materials 14 zu Graphit 12 graphitiert werden.

Somit ist das obere Ende 28a der Heizzone 28 am Übergang der Einlasszone 24 zur Heizzone 28 definiert; das untere Ende 28b der Heizzone 28 ist entsprechend am Übergang der Heizzone 28 zur Auslasszone 26 definiert. Der Innenraum 20 oder der Prozessraum 22 haben vorzugsweise einen kreisrunden Querschnitt. Aber auch alternative Querschnitte, beispielsweise elliptisch oder quadratisch oder rechteckig, sind möglich. In der Regel bildet der Rohmantel 18 die Geometrie des Querschnitts des Innenraums 20 oder des Prozessraums 22 ab und hat einen entsprechenden Außenquerschnitt; dieser kann jedoch auch unterschiedlichen dazu sein.

Die Einlasszone 24 des Prozessrohres 16 ist an einem Zugang 30 mit einer Ausgangsseite 32 eines Zuführförderers 34 für das graphitierbare Material 14 verbunden, dessen Eingangsseite 36 aus einem Materialreservoir 38 mit dem graphitierbaren Material 14 gespeist wird. Beim vorliegenden Ausführungsbeispiel ist der Zuführförderer 34 so eingerichtet, dass er das graphitierbare Material 14 als solches fördert, und ist für diesen Zweck insbesondere als Schneckenförderer ausgebildet, wie es an und für sich bekannt ist. Die Auslasszone 24 des Prozessraumes 22 ist entsprechend an einem Ausgang 40 mit einer Eingangsseite 42 eines Abgabeförderers 44 verbunden, mit dem das hergestellte Graphit 12 aus der Auslasszone 26 entnommen und abgeführt wird. Beim vorliegenden Ausführungsbeispiel ist der Abgabeförderer 44 so eingerichtet, dass er das Graphit 12 als solches fördert, wozu der Abgabeförderer 44 ebenfalls als Schneckenförderer ausgebildet ist. Dieser wird jedoch ergänzend mit Hilfe einer Wasserkühlung gekühlt ist, wie es aber ebenfalls an und für sich bekannt ist.

Der Zuführförderer 34 und der Abgabeförderer 44 sind derart eingerichtet, dass eine gasdichte Verbindung zum Prozessrohr 16 ausgebildet werden kann und auch die Förderung unter Ausschluss der Umgebungsatmosphäre erfolgen kann. Hierfür kommen auch alternative Förderkonzepte in Betracht, wie beispielsweise Zellenradschleusen, Doppelklappensysteme in Verbindung mit zum Beispiel einem Förderband oder einer Vibrationsrinne oder dergleichen.

Im Bereich der Heizzone 28 wird der Prozessraum 16 für den Graphitierungsvorgang mit Hilfe einer Heizeinrichtung 46 auf etwa 2.200 °C bis etwa 3.200 °C, vorzugsweise auf etwa 3.000 °C erhitzt, die in den Figuren lediglich durch den dunkler schraffierten Bereich des Prozessrohres 16 angedeutet ist. Die Heizeinrichtung 46 ist in der Praxis eine elektrische Heizeinrichtung. Beispielsweise ist hierfür die Wandstärke des Prozessrohres 16 im Bereich der Heizzone 28 verringert, so dass sich das Prozessrohr 16 dort auf Grund des höheren elektrischen Widerstandes effektiver aufheizt. Die Heizzone 28 ist durch einen zusammenhängenden Abschnitt des Prozessraumes 22 definiert, in dem im Wesentlichen die gleiche Graphitierungs-Temperatur herrscht.

Das Prozessrohr 16 erstreckt sich durch eine Durchgangsöffnung 48 einer oberen Deckenwand 50 und durch eine Durchgangsöffnung 52 einer unteren Bodenwand 54 eines Isolationsgehäuses 56 aus beispielsweise Stahlblech derart hindurch, das das Prozessrohr 16 mit einem oberen Endabschnitt 16a nach oben und mit einem unteren Endabschnitt 16b nach unten aus dem Isolationsgehäuse 56 herausragt. An der Innenseite der Deckenwand 50 und der Bodenwand 54 sind jeweils plattenförmige Isolationselemente 58, vorzugsweise aus Graphithartfilz, mit einem in axialer Richtung gestuften Durchgang 60 für das Prozessrohr 16 angeordnet, die jeweils eine Stufenfläche 62 definieren. Der jeweilige Bereich des gestuften Durchgangs 60 mit kleinerem Querschnitt ist zur Deckenwand 50 bzw. zur Bodenwand 54 des Isolationsgehäuses 56 gerichtet, so dass die Stufenflächen 62 aufeinander zu weisen. Die Isolationselemente 58 können einstückig sein oder durch zwei plattenförmige Elemente ausgebildet sein, die Durchgangsöffnungen mit unterschiedlichem Durchmesser haben, so dass insgesamt der gestufte Durchgang 60 gebildet ist.

Von der Stufenfläche 62 des Isolationselements 58 an der Deckenwand 50 bis zur Stufenfläche 62 des Isolationselements 58 an der Bodenwand 54 erstreckt sich ein Schutzgehäuse 64 aus Graphit, beispielsweise ein Schutzrohr, für das Prozessrohr 16 in der Weise, dass zwischen dem Prozessrohr 16 und dem Schutzgehäuse 64 ein Ringraum 66 ausgebildet ist, der oben und unten zu den Durchgangsöffnungen 48 und 52 der Deckenwand 50 bzw. der Bodenwand 54 hin offen ist.

Radial neben dem Schutzgehäuse 64 ist ein Isolations-Ringraum 68 ausgebildet, der durch das Schutzgehäuse 64, das Isolationsgehäuse 56 und die Isolationselemente 58 begrenzt ist. Dieser Isolations-Ringraum 68 ist beim vorliegenden Ausführungsbeispiel mit Ruß gefüllt.

Die Durchgangsöffnung 48 der Deckenwand 50 ist mittels einer oberen Anschlusskappe 70 abgedeckt. Beim vorliegenden Ausführungsbeispiel erstreckt sich der der obere Endabschnitt 16a des Prozessrohres 16 durch die obere Anschlusskappe 70 hindurch, so dass zwischen der Deckenwand 50 des Isolationsgehäuses 56 und dem Zugang 30 des Prozessrohres 16 ein oberer Anschluss-Ringraum 72 gebildet ist; dieser ist durch die Durchgangsöffnung 48 und Deckenwand 50 und den Durchgang 60 des oberen Isolationselements 58 mit dem Ringraum 66 strömungstechnisch verbunden.

In entsprechender Weise ist die Durchgangsöffnung 52 der Bodenwand 54 mittels einer unteren Anschlusskappe 74 abgedeckt. Beim vorliegenden Ausführungsbeispiel erstreckt sich der untere Endabschnitt 16b des Prozessrohres 16 durch die untere Anschlusskappe 74 hindurch, so dass zwischen der Bodenwand 54 des Isolationsgehäuses 56 und dem Ausgang 40 des Prozessrohres 16 ein unterer Anschluss-Ringraum 76 gebildet ist; dieser ist seinerseits durch die Durchgangsöffnung 52 der Bodenwand 54 und den Durchgang 60 des unteren Isolationselements 58 mit dem Ringraum 66 strömungstechnisch verbunden.

An den oberen und unteren Übergängen zwischen dem Isolationsgehäuse 56 und den Anschlusskappen 70 bzw. 74 ist eine Gehäuse-Kühleinrichtung 78 zum Schutz der Gehäusekomponenten vorhanden, die als Wasserkühlung konzeptioniert ist, wie es an und für sich bekannt ist.

Durch die Anschluss-Ringräume 72 und 76, den Ringraum 66 und die Durchgänge 60 der Isolationselemente 58 ein Gasraum 80 ausgebildet, der Teil eines Schutzgassystems 82 ist.

Das Schutzgassystem 82 umfasst ferner einen ersten Schutzgas-Einlassanschluss 84.1 an der oberen Anschlusskappe 70 und einen zweiten Schutzgas-Einlassanschluss 84.2 an der unteren Anschlusskappe 74, durch die ein Schutzgas in den Gasraum 80 eingeblasen werden kann.

Da die Isolationselemente 58 porös und dadurch gasdurchlässig sind, diffundiert Schutzgas aus dem Gasraum 80 in den Bereichen der Durchgänge 60 mit kleinerem Querschnitt in die Isolationselemente 58 und weiter in den Isolations-Ringraum 68. An der Deckenwand 50 des Isolationsgehäuses 56 ist ein Schutzgas-Auslassanschluss 86 vorhanden, so dass das Schutzgas abgeführt werden kann. Unterstützend ist an der Bodenwand 54 des Isolationsgehäuses 56 noch ein dritter Schutzgas-Einlassanschluss 84.3 vorhanden, so dass Schutzgas auch gezielt in den Isolations-Ringraum 66 eingeblasen werden kann.

Das Schutzgas um das Prozessrohr 16 herum ist notwendig, da die Graphitierung des graphitierbaren Materials 12 unter einer Inertgasatmosphäre erfolgt, die in dem Prozessraum 22 vorliegt. Als Schutzgas wird in der Regel dasselbe Gas wie das Inertgas verwendet, so dass auf beiden Seiten des Rohrmantels 18 des Prozessrohres 16 die gleiche Gasart vorliegt. Es können jedoch auch unterschiedliche Gase als Schutzgas und als Inertgas verwendet werden, wobei auch das Schutzgas inert sein muss. Als Schutzgas und/oder als Inertgas können beispielsweise Argon, Stickstoff oder Helium oder ein Gemisch davon verwendet werden.

Um nun Inertgas in den Prozessraum 22 zu bringen, ist das Prozessrohr 16 am unteren Endabschnitt 16b mit einem Inertgas-Einlassanschluss 88 gekoppelt, durch den das Inertgas in Prozessraum 22 eingeblasen werden kann. Der obere Endabschnitt 16a des Prozessrohres 16 ist mit einem Abgas-Auslassanschluss 90 verbunden, so dass bei der Graphitierung entstehende Gase mit Inertgas vermischt als Abgas aus dem Prozessraum 22 abgesaugt werden können. In diesem Fall wird der Ofen 10 somit in einem Gegenstrom-Verfahren betrieben, bei dem das Inertgas den Prozessraum 22 in entgegensetzte Richtung zur Bewegungsrichtung des im Prozessraum 22 befindlichen Materials strömt. Alternativ können der Inertgas-Einlassanschluss 88 am oberen Endabschnitt 16a des Prozessrohres 16 und der Abgas-Auslassanschluss 90 am unteren Endabschnitt 16b des Prozessrohres 16 angeordnet sein. Bei einer weiteren Abwandlung können sowohl oben als auch unten jeweils ein Inertgas-Einlassanschluss und ein Abgas-Auslassanschluss mit dem Prozessraum 22 verbunden sein, so dass die Graphitierung wahlweise durch entsprechendes Umschalten im Gegenstrom- oder im Gleichstromverfahren durchgeführt werden kann. Das Abgas wird in jedem dieser Fälle einer thermischen Nachverbrennung zugeführt, wie es an und für sich bekannt ist.

Bei einer weiteren Abwandlung kann von einem am oberen Endabschnitt 16a angeordneten Inertgas-Einlassanschluss 88 ein Begasungsrohr nach unten bis knapp über den Füllstand 92 der Materialsäule 94 führen, so dass Inertgas dort oberhalb der Materialsäule 94 in den Prozessraum 22 eingeblasen wird.

Für die Förderung von Schutzgas, Inertgas oder Abgas erforderlicher Förderkomponenten wie Gebläse, Gaspumpen und dergleichen und zugehörige Leitungen sowie Steuereinrichtungen sind der Einfachheit halber nicht eigens gezeigt.

Der Ofen 10 wird nun wie folgt betrieben:
Vor der ersten Inbetriebnahme muss der Prozessraum 22 bzw. die dort herrschende Prozessraumatmosphäre zunächst von Sauerstoff und Feuchtigkeit, insbesondere durch vorhandene Luft, befreit werden. Hierfür wird der Prozessraum 22 mit dem Inertgas und der Gasraum 80 sowie der Isolations-Ringraum 68 mit Schutzgas gespült.

Die Heizeinrichtung 46 wird aktiviert, und dem Prozessraum 22 wird graphitierbares Material 14 mittels des Zuführförderers 34 bis zu einem Füllstand 92 zugeführt. Wenn hiernach der Abgabeförderer 44 aktiviert wird, fördert dieser zunächst nicht vollständig umgesetztes Material aus dem Prozessraum 22 heraus, bis in der Heizzone 28 erhaltenes Graphit 12 zu dem Abgabeförderer 44 gelangt.

Im laufenden Graphitierungsprozess wird dem Prozessraum 22 graphitierbares Material 14 mit dem Zuführförderer 34 kontinuierlich zugeführt und daraus erhaltenes Graphit 12 mit dem Abgabeförderer 44 aus dem Prozessraum 22 kontinuierlich entfernt. Dabei wird so viel Volumen an graphitierbarem Material 14 pro Zeiteinheit, beispielsweise pro Minute, zugeführt, wie Volumen an Graphit 12 pro Zeiteinheit, also gegebenenfalls pro Minute, abgeführt wird, so dass der Füllstand 92 im Prozessrohr 92 weitgehend konstant bleibt. Hierbei wird der Ofen 10 also insgesamt bezogen auf den Materialhaushalt kontinuierlich betrieben.

Bei einer Abwandlung wird der Ofen 10 bezogen auf den Materialhaushalt insgesamt intermittierend betrieben. In diesem Fall wird bei zeitgleicher Zufuhr und Abfuhr graphitierbares Material 14 dem Prozessraum 22 mit dem Zuführförderer 34 kontinuierlich zugeführt und daraus erhaltenes Graphit 12 mit dem Abgabeförderer 44 aus dem Prozessraum 22 gleichzeitig kontinuierlich entfernt, wenn ein Materialaustauschvorgang durchgeführt wird, bei dem ein bestimmtes Volumen an Graphit 12 entnommen und im Austausch hierfür ein entsprechendes Volumen graphitierbares Material 14 nachgelegt wird.

Bei dem kontinuierlichen Ofenbetrieb jedenfalls sind die Fördergeschwindigkeiten des Zuführförderers 34 und des Abgabeförderers 44 derart eingestellt, dass die Verweildauer des graphitierbaren Materials 14 in der Heizzone 28 bei etwa 3.000 °C etwa 2 bis 3 Stunden beträgt. Dabei kann sich gegebenenfalls in einem unteren Bereich der Heizzone 28 bereits Graphit 12 befinden, das nicht mehr mit graphitierbarem Material durchmischt ist.

Bei einer Temperatur in der Heizzone 28 von etwa 2.700 °C kann die Verweildauer des graphitierbaren Materials 14 etwa 10 bis 20 Stunden betragen.

Figur 1 veranschaulicht eine Verfahrensführung, bei welcher der Füllstand 92 im Prozessrohr 16 dem Höhenniveau des oberen Endes 28a der Heizzone 28 entspricht. Anders ausgedrückt, ist in der gesamten Heizzone 28 eine Materialsäule 94 ausgebildet, die sich von dem Füllstand 92 nach unten und außerdem durch die Auslasszone 26 bis zu dem Ausgang 40 des Prozessrohres 16 erstreckt. Die Einlasszone 24 wird dagegen nur von graphitierbarem Material 14 durchquert, welches nach dem Zuführen durch den Zugang 30 in den Prozessraum 22 von oben durch die Einlasszone 24 hindurch auf die Materialsäule 94 rieselt und dann Teil der Materialsäule 94 wird. Der Begriff Rieseln ist hier als allgemeiner Begriff für das nach unten fallende Material ohne Bezug auf eventuelle technische Kenngrößen wie die Rieselfähigkeit von Schüttgütern oder dergleichen zu verstehen.

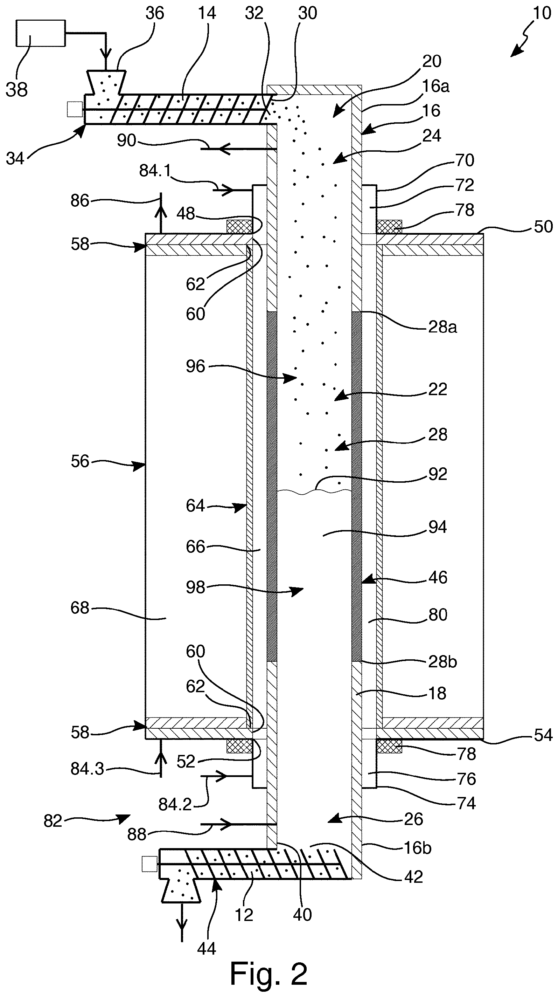

Figur 2 veranschaulicht eine alternative Art der Verfahrensführung, bei welcher der Füllstand 92 unterhalb des oberen Endes 28a der Heizzone 28 liegt. Die Materialsäule 94 ist somit nicht in der gesamten Heizzone 28 ausgebildet. Zwischen der Materialsäule 94, d.h. dem Füllstand 92, und dem oberen Ende 28a der Heizzone 28 ist vielmehr eine Fall-Heizzone 96 ausgebildet, in welche graphitierbares Material 14 von oben aus der Einlasszone 24 eintritt und weiter durch die Fall-Heizzone 94 hindurch auf die Materialsäule 94 rieselt bzw. fällt und dann auf die Materialsäule 94 trifft und ein Teil von dieser wird. Die Fall-Heizzone 94 wird somit von dem graphitierbaren Material 14 im Fallen oder fallend von oben nach unten durchquert.

Bei der hier beschriebenen Prozessweise ist die Fall-Heizzone 96 eine Art Freifall-Heizzone, die von dem graphitierbaren Material 14 im freien Fall von oben nach unten durchquert wird. Dabei kann der Gegenstrom der Atmosphäre im Prozessrohr 16 in Richtung auf den Abgas-Auslassanschluss 90 den Fall der Partikel des graphitierbaren Materials 14 im Vergleich zu einem freien Fall verzögern und dadurch die Verweildauer in der Fall-Heizzone 96 verlängern. Bei der oben angesprochenen Abwandlung, bei welcher der Abgas-Auslassanschluss 90 unten am Prozessrohr 16 vorgesehen ist, kann der Gasstrom den Fall der Partikel des graphitierbaren Materials folglich im Vergleich zu einem freien Fall beschleunigen und dadurch die Verweildauer in der Fall-Heizzone 96 verringern.

Bei nicht eigens gezeigten Abwandlungen kann gegebenenfalls Inertgas in einem Gegenstrom gegen oder in einem Strom in die Fallrichtung gezielt in die Fall-Heizzone 96 eingeblasen werden, um die Fallgeschwindigkeit der Partikel des graphitierbaren Materials 14 gezielt zu verzögern oder zu beschleunigen, um die Verweildauer in der Fall-Heizzone 96 gezielt einzustellen.

Derjenige Bereich der Heizzone 28, in der die Materialsäule 94 ausgebildet ist, definiert eine Stand-Heizzone 98, die von der Heizzone 28 umfasst ist. Der Begriff "Stand" soll lediglich verdeutlichen, dass die Materialsäule 94 als solche weitgehend stationär vorhanden ist, wobei die Materialsäule 94 sich auf Grund der Materialzufuhr und Materialabfuhr im Betrieb des Ofens 10 durchaus verändert. In der Fall-Heizzone 94 und in der Stand-Heizzone 98 herrscht zumindest weitgehend die gleiche Temperatur.

In der Fall-Heizzone 94 wird das graphitierbare Material 14 bereits während des Einrieselns erwärmt und erreicht die Materialsäule 94 bereits mit einer höheren Ausgangstemperatur als im Falle einer Materialsäule 94 mit einem Füllstand 92 am oberen Ende 28a der Heizzone 28. Hierdurch erreichen Materialpartikel des graphitierbaren Materials 14 die für die Graphitierung erforderliche Temperatur schneller.

Bei der in Figur 2 gezeigten Variante decken die Fall-Heizzone 96 und die Stand-Heizzone 98 jeweils etwa 50% der Heizzone 28 ab. In der Praxis konnte eine effektive Graphitierung in einem Ofen 10 erreicht werden, bei dem die Fall-Heizzone 96 zwischen 10% bis 60%, vorzugsweise zwischen 20% bis 55%, weiter bevorzugt zwischen 30% und 50%, insbesondere 30% oder die veranschaulichten 50% der Heizzone 28 abdeckt.

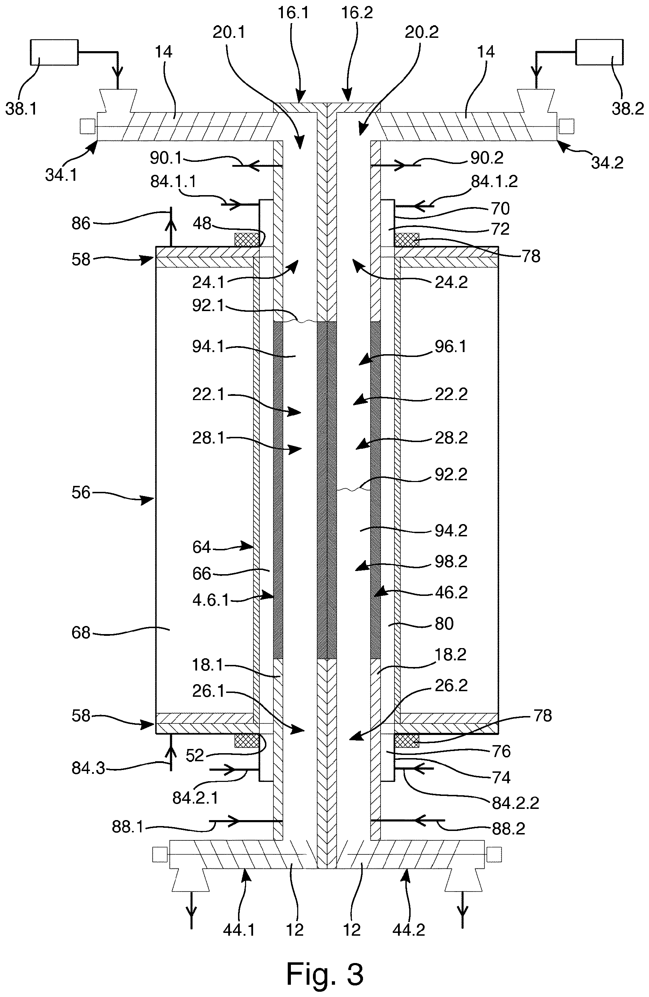

Figur 3 zeigt einen Ofen 10 gemäß einem zweiten Ausführungsbeispiel, bei dem sich zwei Prozessrohre 16.1 und 16.2 durch das Isolationsgehäuse 56 hindurch erstrecken. Dieses Ausführungsbeispiel veranschaulicht auch weitere Abwandlungen, bei denen mehr als zwei Prozessrohre 56 vorhanden sind und sich in entsprechender Weise durch das Isolationsgehäuse 56 hindurch erstrecken.

In Figur 3 sind der Einfachheit halber nicht alle Bauteile und Komponenten mit Bezugszeichen versehen; gekennzeichnete Bauteile und Komponenten, die den Bauteilen und Komponenten nach den Figuren 1 und 2 entsprechen, sind mit denselben Bezugszeichen versehen, wobei die Zugehörigkeit zu dem ersten Prozessrohr 16.1 oder zu dem zweiten Prozessrohre 16.2 gegebenenfalls durch einen entsprechenden Index .1 oder .2 gekennzeichnet ist.

Das Schutzgehäuse 64 umgibt hier beide Prozessrohre 16.1, 16.2, es ist jedoch auch möglich, dass jedem Prozessrohr 16.1, 16.2 ein gesondertes Schutzgehäuse 64 zugeordnet ist.

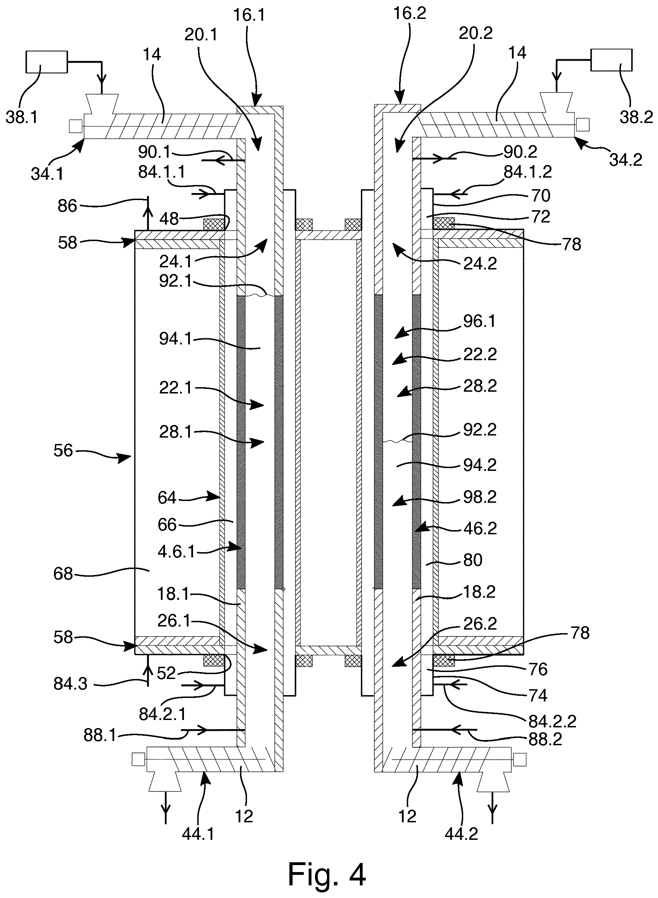

Figur 3 zeigt außerdem, dass die Prozessrohre 16.1, 16.2 aneinander anliegen; bei eine Abwandlung, die in Figur 4 veranschaulicht ist, können die Prozessrohre 16.1, 16.2 jedoch auch voneinander beabstandet sein, so dass auch zwischen den Prozessrohren 16.1 und 16.2 Ruß angeordnet ist; der Ringraum 68 ist entsprechend abgewandelt. Die umgebenden Gehäuse und zugeordnete Durchgänge und Öffnungen sind entsprechend modifiziert. Es sind folglich zwei Schutzgehäuse 64 und Ringräume 66 vorhanden, ebenso finden sich zwei obere Anschlusskappen 70 und zwei unteren Anschlusskappen 74, ohne dass in Figur jeweils alle nun zweifach vorkommenden Bauteile Bezugszeichen tragen.

Bei dem in Figur 3 gezeigten Ausführungsbeispiel ist jedem Prozessrohr 16.1, 16.2 jeweils ein gesonderter Zuführförderer 34.1 bzw. 34.2 und jeweils ein gesonderter Abgabeförderer 44.1 bzw. 44.2 zugewiesen. Bei einer Abwandlung kann auch lediglich ein einziger Zuführförderer 34 vorhanden sein, der beide Prozessrohre 16.1, 16.2 mit Material versorgt. Dementsprechend kann auch nur ein einziger Abgabeförderer 44 vorhanden sein, der aus beiden Prozessrohren 16.1, 16.2 Graphit 12 aufnimmt und abführt.

Wenn mehr als zwei Prozessrohre 16 vorhanden sind, kann ein einzelner Zuführförderer 34 lediglich einen, ein Paar oder Gruppen mit drei oder mehr Prozessrohren 16 und gegebenenfalls alle Prozessrohre 16 mit graphitierbaren Material 14 beschicken. In entsprechender Weise kann bei mehr als zwei Prozessrohren 16 ein einzelner Abgabeförderer 44 lediglich aus einem, aus einem Paar oder aus Gruppen mit drei oder mehr Prozessrohren 16 und gegebenenfalls aus allen Prozessrohren 16 erhaltenes Graphit 12 aufnehmen und abführen.

Wenn zwei Prozessrohren 16.1, 16.2jeweils gesonderte Zuführförderer 34.1, 34.2 und gesonderte Abgabeförderer 44.1, 44.2 zugeordnet sind, können die Prozessrohre 16.1, 16.2 mit unterschiedlichen graphitierbaren Materialien 14 beschickt werden, die verschiedene Verweildauern in der jeweiligen Heizzone 28.1, 28.2 oder einer Stand-Heizzone 98 benötigen, wobei letzteres in Figur 3 nur anhand der Standheizzone 98.2 beim Prozessrohr 16.2 gezeigt ist. Dies veranschaulicht, dass verschiedene Prozessrohre 16.1, 16.2 auch in unterschiedlichen Betriebsmodi betrieben werden können.

Unabhängig von der Gesamtanzahl der Prozessrohre 16 können die Heizzonen 28.1, 28.2 bei zwei verschiedenen Prozessrohren 16.1, 16.2 gleich lang oder unterschiedliche lang sein. Wenn die Prozessrohre 16.1, 16.2 jeweils mit einer Fall-Heizzone 96 betrieben werden, können auch deren Längen und somit das jeweilige Längenverhältnis von Fall-Heizzone 96 zu Stand-Heizzone 98 unterschiedlich sein.

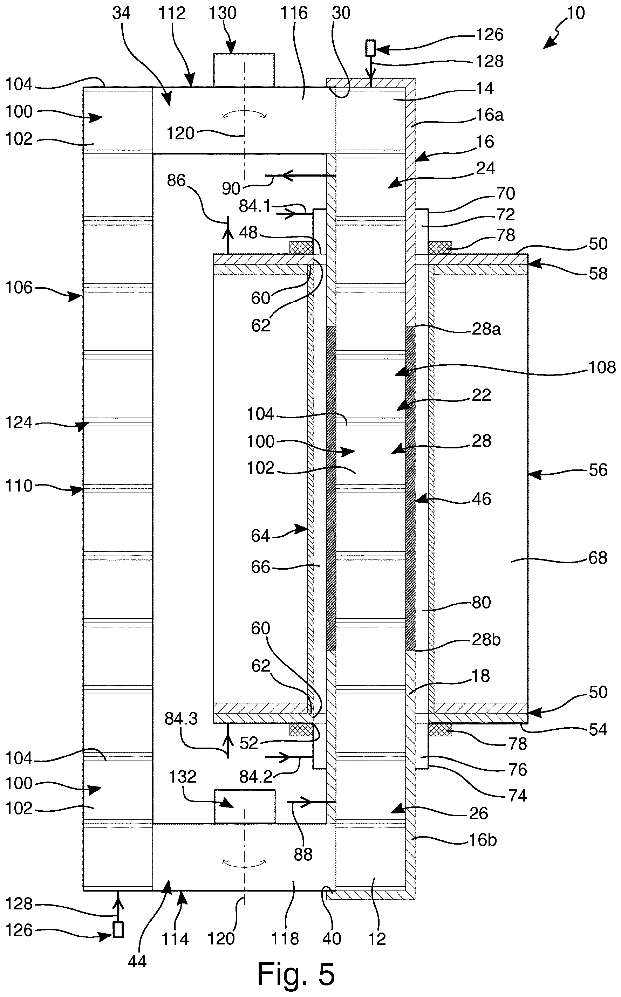

Figur 5 veranschaulicht ein nicht erfindungsgemäßes drittes Ausführungsbeispiel des Ofens 10, bei dem das graphitierbare Material 14 nicht als solches als Schütt- oder Rieselgut in den Prozessraum 22 eingebracht wird, sondern in einem Materialbehälter 100 durch den Prozessraum 22 und durch die Heizzone 28 gefördert wird. Als Materialbehälter 100, von denen lediglich drei Bezugszeichen tragen, sind beim vorliegenden Ausführungsbeispiel Tiegel 102 mit einem Tiegeldeckel 104 vorgesehen. Ein Fördersystem 106 ist derart eingerichtet, dass ein mit graphitierbaren Material 14 gefüllter Materialträger 100 auf dem Weg durch den Zugang 30 in den Prozessraum 22 hinein, von dort durch den Prozessraum 22 hindurch zum Ausgang 40 und auf dem Weg durch den Ausgang 40 aus dem Prozessraum 22 heraus gefördert werden kann.

Hierzu umfasst das Fördersystem 106 den Zuführförderer 34 und den Abgabeförderer 44, die bei diesem Ausführungsbeispiel derart eingerichtet sind, dass sie Materialbehälter 100 mit Material fördern. Außerdem umfasst das Fördersystem 106 einen Prozessraumförderer 108, der ebenfalls derart eingerichtet ist, dass er Materialbehälter 100 mit Material in dem Prozessraum 22 fördert, und welcher die Materialbehälter 100 von dem Zugang 30 zu dem Ausgang 40 fördert.

Zudem ist das Fördersystem 106 beim vorliegenden Ausführungsbeispiel als Umlauf-Fördersystem konzipiert und umfasst hierfür einen Verbindungsförderer 110, mittels welchem Materialbehälter 100 von dem Abgabeförderer 44 zu dem Zuführförderer 34 gefördert werden können.

Der Zuführförderer 34 und der Abgabeförderer 44 sind hier als Drehförderer 112 bzw. 114 konzipiert, welche jeweils ein Drehelement 116 bzw. 118 umfassen, die um eine jeweilige vertikale Drehachse 120 verdrehbar sind. Der Prozessraumförderer 108 und der Verbindungsförderer 110 sind als Linearförderer 122 bzw. 124 konzipiert, wozu jeweils eine Schubeinrichtung 126 mit einem angetriebenen Schubelement 128, hier in Form einer Schubstange, vorhanden ist. Bei dem Prozessraumförderer 108 schiebt das Schubelement 128 einen Materialbehälter 100 nach dessen Eintritt in den Prozessraum 22 in der Einlasszone 24 an. Dieser Materialbehälter 100 stößt dabei gegen den darunter befindlichen Materialbehälter 100 an, wodurch alle im Prozessraum 22 befindlichen Materialbehälter 100 um einen Platz weitergeschoben werden. Damit dies funktioniert, ist zu diesem Zeitpunkt am Ausgang 40 des Prozessraumes 22 eine Leerstelle ohne Materialbehälter 100 vorhanden.

Wenn die Materialbehälter 100 auf dem Weg durch den Prozessraum 22 die Heizzone 28 durchqueren, wird das graphitierbare Material 14 zu Graphit 12 graphitiert. Ein Materialbehälter 100 am Ausgang 40 enthält folglich Graphit 12. Wenn ein Materialbehälter 100 am Ausgang 40 des Prozessrohres 16 angelangt ist, ist am Zugang 30 eine Leerstelle ausgebildet, so dass dort ein mit graphitierbarem Material 14 beladender Materialbehälter 100 mit dem Zuführförderer 34 in den Prozessraum 22 gefördert werden kann. Dabei wird am Ende der Förderstrecke des Verbindungsförderer 110 eine Leerstelle am Zuführförderer 34 erzeugt, in die dann ein leerer Materialbehälter 100 mit Hilfe des Verbindungsförderers 110 eingeschoben wird, der in der gleichen Weise arbeitet wie der Prozessraumförderer 108. Eine dann auftretende Leerstelle am Eingang des Verbindungsförderers 110 wird mit einem leeren Materialbehälter 100 durch den Abgabeförderer 44 gefüllt, wenn dieser den mit Graphit 12 beladenen Materialbehälter 100 aus dem Prozessrohr 16 entnimmt.

Der Zuführförderer 34 umfasst eine Befüllstation 130, mit der ein leerer Materialbehälter 100 mit graphitierbaren Material 14 gefüllt werden kann. Der Abgabeförderer 44 umfasst eine Entleerstation 132, mit welcher Graphit 12 aus einem Materialbehälter 100 entnommen werden kann. Dabei sind geeignete Schleusenkonzepte umgesetzt, um eine Kontamination der Ofenatmosphäre mit Fremdatmosphäre zu verhindern.

Bei den in Figur 5 veranschaulichten Verhältnissen sind die Drehelemente 116 und 118 auf vier Aufnahmeplätze für Materialbehälter 100 ausgelegt, so dass bei jedem Takt eine Drehung von 90° um die Drehachse 120 durchgeführt wird. Die Befüllstation 130 wird dabei einen Takt vor dem Zugang 30 des Prozessrohres 16 von einem leeren Materialbehälter 100 und die Entleerstation 132 einen Takt nach dem Ausgang 40 des Prozessrohres 16 von einem mit Graphit 12 gefüllten Materialbehälter 100 erreicht.

Im Prozessraum 22 werden die Materialbehälter 100 bei dem beschriebenen Ofen 10 folglich intermittierend gefördert. Bei einer Abwandlung und einem hierfür ausgelegten Fördersystem 106 können die Materialbehälter 100 im Prozessraum 22 auch kontinuierlich gefördert werden.

Bei allen oben beschriebenen Ausführungsbeispielen erfolgt eine Überwachung der Temperatur in der Heizzone 28. bzw. der Temperatur der Materialsäule 94 mit einer Temperatur-Überwachungseinrichtung.

Hierfür wird die Temperatur am oberen Ende 28a der Heizzone 28 und/oder in etwa der Mitte der Heizzone 28 und/oder am unteren Ende 28b der Heizzone 28 jedes vorhandenen Prozessrohres 16 ermittelt.

Alternativ oder ergänzend kann auch eine Temperaturmessung von oben am Füllstand 92 der Materialsäule 94 erfolgten.

Die Temperaturmessungen erfolgen vorzugsweise mit einem Pyrometer mit einem Pyrometerrohr, wie es an und für sich bekannt ist, wobei das Messende des Pyrometerrohres an der jeweiligen Messstelle angeordnet ist. Bevorzugt erfolgt die Messung seitlich auf die Heizeinrichtung 46.

Für die Messung an der Heizzone 28 verläuft das Pyrometerrohr beispielsweise von außen durch die Außenwand des Isolationsgehäuses 56 sowie durch den Isolations-Ringraum 66 und durch die Wand des Schutzgehäuses 64 hindurch in den Ringraum 66 bis vor den Rohrmantel 18 des Prozessrohres 16. An dem freien Ende des Pyrometerrohres an der Außenseite des Schutzgehäuses 56 ist das zugehörige Pyrometer positioniert. Vorzugsweise sind entsprechende Pyrometerrohre horizontal angeordnet. Aus der so ermittelten Temperatur außen am Prozessrohr kann die Temperatur

Wenn oben am Füllstand 92 der Materialsäule 94 gemessen werden soll, erstreckt sich ein Pyrometerrohr von oben in das Prozessrohr 16 bis knapp oberhalb des Füllstandes 92. Das Pyrometerrohr verläuft dann vorzugsweise vertikal und das Pyrometer ist entsprechend oben am Pyrometerrohr angeordnet. Aber auch eine horizontale Anordnung des Pyrometerrohres ist möglich. In diesem Fall durchdringt das Pyrometerrohr jedoch auch den Rohrmantel 18 des Prozessrohres 16 und mündet in den Prozessraum 22.

## Patentansprüche

1. Verfahren zum Herstellen von Graphit in einem vertikalen Graphitierungsofen mit wenigstens einem Prozessraum (22), der eine Heizzone (28) begrenzt, bei welchem
a) in der Heizzone (28) eine Temperatur von 2.200 °C bis 3.200 °C, insbesondere von 2.700°C bis 3.200 °C, vorzugsweise von 3.000 °C, erzeugt wird;
b) partikelförmiges graphitierbares Material (14) dem Prozessraum (22) durch einen Zugang (30) zugeführt wird;
c) graphitierbares Material (14) durch die Heizzone (28) des Prozessraumes (22) hindurch gefördert wird, in der es zu Graphit graphitiert wird;
d) erhaltenes Graphit (12) durch einen Ausgang (40) aus dem Prozessraum (22) abgeführt wird;
**dadurch gekennzeichnet, dass**
e) der Prozessraum (22) im Innenraum (20) eines Prozessrohres (16) mit einem Rohrmantel (18) aus Graphit untergebracht ist und das Prozessrohr (16) mit Hilfe einer elektrischen Heizeinrichtung auf Grund des elektrischen Widerstandes des Prozessrohres (16) im Bereich der Heizzone (28) aufgeheizt wird
und
in der gesamten Heizzone (28) eines bestimmten Prozessraumes (22) eine Materialsäule (94) ausgebildet wird, wobei graphitierbares Material (14) nach Zuführen durch den Zugang (30) von oben durch eine Einlasszone (24) des Prozessraumes (22) hindurch auf die Materialsäule (94) rieselt.

2. Verfahren nach Anspruch 1, **dadurch gekennzeichnet, dass** einem bestimmten Prozessraum (22) so viel Volumen an graphitierbarem Material (14) pro Zeiteinheit zugeführt wird, wie diesem Prozessraum (22) Volumen an Graphit (12) pro Zeiteinheit abgeführt wird.

3. Verfahren nach Anspruch 1 oder 2, **dadurch gekennzeichnet, dass** das graphitierbares Material (14) kontinuierlich oder intermittierend einem bestimmten Prozessraum (22) zugeführt und Graphit (12) kontinuierlich oder intermittierend aus diesem Prozessraum (22) abgeführt wird.

4. Verfahren nach einem der Ansprüche 1 bis 3, **dadurch gekennzeichnet, dass** ein Füllstand (92) der Materialsäule (94) konstant gehalten wird.

5. Verfahren nach einem der Ansprüche 1 bis 4, **dadurch gekennzeichnet, dass** ein Graphitierungsofen (10) mit mehreren Prozessräumen (22) verwendet wird, dessen mehrere Prozessräume (22) zeitlich parallel betrieben werden.

6. Verfahren nach einem der Ansprüche 1 bis 5, **dadurch gekennzeichnet, dass** die Partikel des graphitierbaren Materials (14) einen durchschnittlichen Partikeldurchmesser größer als 5 µm und kleiner als 3.000 µm, kleiner als 2.500 µm, kleiner als 2.000 µm, kleiner als 1500 µm, kleiner als 1.000 µm oder kleiner als 500 µm haben oder dass die Partikel des graphitierbaren Materials (14) einen durchschnittlichen Partikeldurchmesser von 5 µm bis 3.000 µm, von 500 µm bis 2.000 µm oder von 1.000 µm bis 1.500 µm haben.

7. Verfahren nach einem der Ansprüche 1 bis 6, **dadurch gekennzeichnet, dass** die Temperatur der Heizzone (28) ermittelt wird, insbesondere am oberen Ende (28a) der Heizzone (28) und/oder in etwa der Mitte der Heizzone (28) und/oder am unteren Ende (28b) der Heizzone (28) und/oder an der Materialsäule (94) jedes vorhandenen Prozessrohres (16).

8. Vertikaler Graphitierungsofen mit wenigstens einem Prozessraum (22), der eine Heizzone (28) begrenzt, mit
a) einer Heizeinrichtung (46), mittels welcher in der Heizzone (28) eine Temperatur von 2.200 °C bis 3.200 °C, insbesondere von 3.000 °C, erzeugbar ist;
b) einem Zuführförderer (34), mittels welchem partikelförmiges graphitierbares Material (14) dem Prozessraum (22) durch einen Zugang (30) zuführbar ist;
wobei
c) graphitierbares Material (14) durch die Heizzone (28) des Prozessraumes (22) hindurch förderbar ist, in der es zu Graphit graphitiert wird;
d) ein Abgabeförderer (44) vorhanden ist, mittels welchem erhaltenes Graphit (12) durch einen Ausgang (40) aus dem Prozessraum (22) abführbar ist;
**dadurch gekennzeichnet, dass**
e) der Prozessraum (22) im Innenraum (20) eines Prozessrohres (16) mit einem Rohrmantel (18) aus Graphit untergebracht ist und eine elektrische Heizeinrichtung vorhanden ist, mit deren Hilfe das Prozessrohr (16) auf Grund des elektrischen Widerstandes des Prozessrohres (16) im Bereich der Heizzone (28) aufheizbar ist, und die Heizzone (28) bei wenigstens einem Prozessraum (22) eine Fall-Heizzone (96) und eine Stand-Heizzone (98) umfasst, die derart eingerichtet sind, dass in der Stand-Heizzone (98) eine Materialsäule (94) ausgebildet ist und graphitierbares Material (14) nach Zuführen durch den Zugang (30) von oben durch die Fall-Heizzone (96) auf die Materialsäule (94) rieselbar ist.

9. Vertikaler Graphitierungsofen nach Anspruch 8, **dadurch gekennzeichnet, dass** mehrere Prozessräume (22) vorhanden sind.

10. Vertikaler Graphitierungsofen nach einem der Ansprüche 8 oder 9, **dadurch gekennzeichnet, dass** eine Temperatur-Überwachungseinrichtung vorgesehen ist, mittels welcher die Temperatur der Heizzone (28) ermittelbar ist, insbesondere am oberen Ende (28a) der Heizzone (28) und/oder in etwa der Mitte der Heizzone (28) und/oder am unteren Ende (28b) der Heizzone (28) und/oder an der Materialsäule (94) jedes vorhandenen Prozessrohres (16).

## Claims

1. A process for producing graphite in a vertical graphitization furnace having at least one process space (22) which delimits a heating zone (28), in which
a) a temperature of from 2200°C to 3200°C, in particular of from 2700°C to 3200°C, preferably of 3000°C, is generated in the heating zone (28);
b) particulate graphitizable material (14) is fed through an entrance (30) into the process space (22);
c) graphitizable material (14) is conveyed through the heating zone (28) of the process space (22), in which it is graphitized to give graphite;
d) graphite (12) obtained is discharged from the process space (22) through an exit (40);
**characterized in that**,
e) the process space (22) is accommodated in the interior space (20) of a process tube (16) having a tube jacket (18) made of graphite, the process tube (16) is heated by means of an electrical heating device due to the electrical resistance of the process tube (16) in the region of the heating zone (28)
and
a column of material (94) is formed in the total heating zone (28) of a particular process space (22), with graphitizable material (14) which has been fed in through the entrance (30) trickling from the top through an inlet zone (24) of the process space (22) onto the column of material (94).

2. The process as claimed in claim 1, **characterized in that** the same volume of graphitizable material (14) is fed into a particular process space (22) per unit of time as the volume of graphite (12) which is discharged from this process space (22) per unit of time.

3. The process as claimed in claim 1 or 2, **characterized in that** the graphitizable material (14) is fed continuously or intermittently into a particular process space (22) and graphite (12) is discharged continuously or intermittently from this process space (22).

4. The process as claimed in any of claims 1 to 3, **characterized in that** a fill level (92) of the column of material (94) is kept constant.

5. The process as claimed in any of claims 1 to 4, **characterized in that** a graphitization furnace (10) which has a plurality of process spaces (22) and whose plurality of process spaces (22) are operated in parallel in time is used.

6. The process as claimed in any of claims 1 to 5, **characterized in that** the particles of the graphitizable material (14) have an average particle diameter of greater than 5 µm and less than 3000 µm, less than 2500 µm, less than 2000 µm, less than 1500 µm, less than 1000 µm or less than 500 µm, or **in that** the particles of the graphitizable material (14) have an average particle diameter of from 5 µm to 3000 µm, from 500 µm to 2000 µm or from 1000 µm to 1500 µm.

7. The process as claimed in any of claims 1 to 6, **characterized in that** the temperature of the heating zone (28) is determined, in particular at the upper end (28a) of the heating zone (28) and/or in approximately the middle of the heating zone (28) and/or at the lower end (28b) of the heating zone (28) and/or at the column of material (94) of each process tube (16) present.

8. A vertical graphitization furnace having at least one process space (22) which delimits a heating zone (28), comprising
a) a heating device (46) by means of which a temperature of from 2200°C to 3200°C, in particular of 3000°C, can be generated in the heating zone (28);
b) a feed conveyor (34) by means of which particulate graphitizable material (14) can be fed through an entrance (30) into the process space (22);
where
c) graphitizable material (14) can be conveyed through the heating zone (28) of the process space (22), in which it is graphitized to give graphite;
d) an output conveyor (44) is present, by means of which graphite (12) obtained can be discharged from the process space (22) through an exit (40);
**characterized in that**
e) the process space (22) is accommodated in the interior space (20) of a process tube (16) having a tube jacket (18) made of graphite, and an electrical heating device is provided by means of which the process tube (16) can be heated due to the electrical resistance of the process tube (16) in the region of the heating zone (28), and the heating zone (28) in at least one process space (22) comprises a falling heating zone (96) and a standing heating zone (98) which are configured such that a column of material (94) is formed in the standing heating zone (98) and graphitizable material (14) which has been fed in through the entrance (30) can trickle from the top through the falling heating zone (96) onto the column of material (94)

9. The vertical graphitization furnace as claimed in claim 8, **characterized in that** a plurality of process spaces (22) are present.

10. The vertical graphitization furnace as claimed in claim 8 or 9, **characterized in that** a temperature monitoring device is provided, by means of which it is possible to determine the temperature of the heating zone (28), in particular at the upper end (28a) of the heating zone (28) and/or in approximately the middle of the heating zone (28) and/or at the lower end (28b) of the heating zone (28) and/or at the column of material (94) of each process tube (16) present.

## Revendications

1. Procédé de fabrication de graphite dans un four de graphitisation vertical comportant au moins une chambre de traitement (22) délimitant une zone de chauffage (28), dans lequel
A) dans la zone de chauffage (28), une température entre 2 200 °C et 3 200 °C, en particulier entre 2 700 °C et 3 200 °C, de préférence de 3 000 °C, est générée ;
b) un matériau graphitisable sous forme de particules (14) est acheminé vers la chambre de traitement (22) par un accès (30) ;
c) matériau graphitisable (14) est transporté à travers la zone de chauffage (28) de la chambre de traitement (22), dans laquelle il est graphitisé en graphite ;
d) le graphite obtenu (12) est évacué de la chambre de traitement (22) par une sortie (40) ; **caractérisé en ce que**
e) la chambre de traitement (22) est logée dans la cavité (20) d'un tube de traitement (16) avec une enveloppe de tube (18) en graphite, et le tube de traitement (16) est chauffé à l'aide d'un dispositif de chauffage électrique en raison de la résistance électrique du tube de traitement (16) dans la zone de chauffage (28)
et
dans toute la zone de chauffage (28) d'une chambre de traitement (22) déterminée, une colonne de matériau (94) est formée, le matériau graphitisable (14) s'écoulant par le haut, après avoir été acheminé par l'accès (30), à travers une zone d'entrée (24) de la chambre de traitement (22) sur la colonne de matériau (94).

2. Procédé selon la revendication 1, **caractérisé en ce qu'**un volume de matériau graphitisable (14) par unité de temps est acheminé vers une chambre de traitement (22) déterminée, correspondant au volume de graphite (12) par unité de temps évacué de cette chambre de traitement (22).

3. Procédé selon la revendication 1 ou 2, **caractérisé en ce que** le matériau graphitisable (14) est acheminé de manière continue ou intermittente vers une chambre de traitement (22) déterminée et que le graphite (12) est évacué de manière continue ou intermittente de cette chambre de traitement (22).

4. Procédé selon l'une des revendications 1 à 3, **caractérisé en ce qu'**un niveau de remplissage (92) de la colonne de matériau (94) est maintenu constant.

5. Procédé selon l'une des revendications 1 à 4, **caractérisé en ce qu'**un four de graphitisation (10) avec plusieurs chambres de traitement (22) est utilisé, dont plusieurs chambres de traitement (22) sont exploitées en parallèle dans le temps.

6. Procédé selon l'une quelconque des revendications 1 à 5, **caractérisé en ce que** les particules de matériau graphitisable (14) ont un diamètre de particule moyen supérieur à 5 µm et inférieur à 3 000 µm, inférieur à 2 500 µm, inférieur à 2 000 µm, inférieur à 1 500 µm, inférieur à 1 000 µm ou inférieur à 500 µm ou **en ce que** les particules de matériau graphitisable (14) ont un diamètre de particule moyen de 5 µm à 3 000 µm, de 500 µm à 2 000 µm ou de 1 000 µm à 1 500 µm.

7. Procédé selon l'une quelconque des revendications 1 à 6, **caractérisé en ce que** la température de la zone de chauffage (28) est déterminée, en particulier à l'extrémité supérieure (28a) de la zone de chauffage (28) et/ou à peu près au centre de la zone de chauffage (28) et/ou à l'extrémité inférieure (28b) de la zone de chauffage (28) et/ou à la colonne de matériau (94) de chaque tube de traitement (16) présent.

8. Four de graphitisation vertical comportant au moins une chambre de traitement (22) délimitant une zone de chauffage (28), avec
a) un dispositif de chauffage (46) permettant d'atteindre une température de 2 200 °C à 3 200 °C, en particulier de 3 000 °C, dans la zone de chauffage (28) ;
b) un convoyeur d'alimentation (34) permettant d'acheminer le matériau graphitisable sous forme de particules (14) vers la chambre de traitement (22) par un accès (30) ;
dans lequel
c) le matériau graphitisable (14) est transportable à travers la zone de chauffage (28) de la chambre de traitement (22), dans laquelle il est graphitisé ;
d) un convoyeur de déchargement (44) est prévu, au moyen duquel le graphite obtenu (12) est évacuable de la chambre de traitement (22) par une sortie (40) ;
**caractérisé en ce que**
e) la chambre de traitement (22) est logée dans la cavité (20) d'un tube de traitement (16) avec une enveloppe de tube (18) en graphite et un dispositif de chauffage électrique est prévu, au moyen duquel le tube de traitement (16) est chauffable dans la zone de chauffage (28) en raison de la résistance électrique du tube de traitement (16), et la zone de chauffage (28) comprend, pour au moins une chambre de traitement (22), une zone de chauffage à chute (96) et une zone de chauffage à stationnement (98) qui sont agencées de telle sorte qu'une colonne de matériau (94) est formée dans la zone de chauffage á stationnement (98) et que le matériau graphitisable (14), après avoir été acheminé par l'accès (30), est apte á s'écouler par le haut à travers la zone de chauffage à chute (96) sur la colonne de matériau (94).

9. Four vertical de graphitisation selon la revendication 8, **caractérisé en ce qu'**il comporte plusieurs chambres de traitement (22).

10. Four de graphitisation vertical selon l'une des revendications 8 ou 9, **caractérisé en ce qu'**un dispositif de surveillance de la température est prévu, au moyen duquel la température de la zone de chauffage (28) est déterminable, en particulier à l'extrémité supérieure (28a) de la zone de chauffage (28) et/ou à peu près au centre de la zone de chauffage (28) et/ou à l'extrémité inférieure (28b) de la zone de chauffage (28) et/ou à la colonne de matériau (94) de chaque tube de traitement (16) présent.
